# EUROPEAN PATENT SPECIFICATION

(11) **EP 3 572 138 B1**
(45) Date of publication and mention of the grant of the patent: **22.12.2021**
(21) Application number: 18173518.4
(22) Date of filing: 22.05.2018
(51) Int. Cl.: B01D 46/00, B01D 46/24

(54) **FLUID FILTER WITH SECONDARY FILTER ELEMENT OF LIGHTWEIGHT CONSTRUCTION**
FLÜSSIGKEITSFILTER MIT SEKUNDÄRFILTERELEMENT IN LEICHTBAUWEISE
FILTRE À LIQUIDES COMPRENANT UN ÉLÉMENT DE FILTRE SECONDAIRE DE CONSTRUCTION LÉGÈRE

(43) Date of publication of application: 27.11.2019
(73) Proprietor: MANN+HUMMEL GmbH, 71636 Ludwigsburg (DE)
(72) Inventor: Fritzsching, Torsten, 71665 Vaihingen (DE); Neef, Pascal, 78647 Trossingen (DE); Sharma, Mridul, Pin code - 560094 Bangalore (IN); Kumaresan, Prabhu, 627808 Tenkasi Taluk (IN); Venkatraman, Sridhar, 70800 Ostrava-Poruba (CZ); Schuldt, Joachim, 67071 Ludwigshafen (DE)
(74) Representative: Mann + Hummel Intellectual Property

(56) References cited:
- EP-A1- 0 752 263
- WO-A1-02/49738
- WO-A1-2012/143793
- DE-A1- 19 727 369
- DE-A1-102015 004 965
- US-A1- 2014 144 111

## Description

### Technical Field

The invention relates to a fluid filter for filtering fluid, in particular air, with a secondary filter element of lightweight construction and to a use of a secondary filter element.

### Prior art

DE 10 2015 004 965 A1 discloses a fluid filter which may be used for filtering air and which comprises a filter housing with an integral central support tube. The central support tube extends along a longitudinal axis of the filter housing within the filter housing. The known fluid filter has a primary filter element arranged inside the filter housing in an exchangeable manner, and an accessory or secondary filter element, which is positioned at least partially inside the primary filter element. Both filter elements are arranged coaxially with respect to the longitudinal axis of the filter housing such that the fluid to be filtered can sequentially flow through a filter medium of the primary filter element and subsequently the secondary filter element in a radial direction from outside to inside. The secondary filter element has a filter medium, which is directly supported in a radially inward direction by the central support tube. The filter medium, at one of the free end portions of the secondary filter element, directly engages in a groove-shaped retaining structure of the filter housing. The Secondary filter element has an end disc which is snap-fitted to the central support tube. When mounting of the secondary filter element to the retaining structure, the filter medium may be easily damaged such that there is a rsik of an ingress of dirt particles into the clean side of the fluid filter during replacement of the primary filter element. This may lead to damages to other components, such as a combustion engine of a motor vehicle or a fluid pump fluidly connected thereto. Further, the sealing abutment of the filter medium engaging against one of the groove flanks of the retaining structure is inevitably limited due to manufacturing tolerances of the secondary filter element and the filter housing.

WO 02/49738 A1 describes a fluid filter with a main filter element and a secondary filter element, wherein the secondary element is held force-fit in the housing. The holding force is applied indirectly through a contact between a housing cover and a closed side of the secondary element. The sealing of the secondary filter element against the housing is at least partly realized by a filter media of the secondary filter element.

It is the object of the invention to provide a fluid filter with a secondary filter element and a secondary filter element that can be manufactured in a cost-efficient way and which may be mounted more safely to provide for a reliable sealing of the secondary filter element with respect to the filter housing.

### Detailed description of the invention

The fluid filter according to the invention has the features as given in claim 1. A secondary filter element according to the invention is given in claim 13. Preferred embodiments of the invention are subject of the dependent claims.

In the fluid filter according to the invention, the secondary filter element of the fluid filter serves to protect the clean side of the filter element against an entry of undesirable particulate matter during maintenance work of the fluid filter, in particular when the primary filter element is replaced. Normally, dirt particles and other contaminants located inside the filter housing may become loosened and enter the clean side of the filter housing. When restarting the fluid filter, particulate matter would otherwise put a machine or component positioned downstream the fluid filter, e.g. a combustion engine of a car or truck, a high-pressure (injection) pump or the like, at risk for damage. The secondary filter element comprises a support structure with a mounting ring positioned at the first end portion of the secondary filter element and to which the filter medium is fixed in a non-detachably manner. A sealing between the first end portion of the secondary filter element and the filter housing is effected partially or solely by the filter medium of the secondary filter element. Due to the mounting ring, the filter medium is reinforced just at the end portion of the filter element, which is to sealingly abut against the filter housing. Mounting of the secondary filter element can be thereby be greatly facilitated and the risk of a damage of the filter medium is further reduced. As a result, the clean side of the fluid filter can be more reliably protected against an unwanted ingress of dirt particles.

The support structure of the secondary filter element has an end disc. The mounting ring and the end disc are preferably connected to one another by axial struts. Thereby, the filter medium of the secondary filter element can be further reinforced such that the risk of an unwanted deformation or rupture of the filter medium is further reduced, in particular when mounting the filter element inside the filter housing. In this case, the filter medium may be formed of a highly flexible and rather low-cost material. Advantageously, there are no transverse bracings provided to minimize material usage and manufacturing costs of the secondary filter element.

According to the invention, the mounting ring and the end disc can alternatively be interconnected by the filter medium of the second filter element only. By this, material usage can be further minimized. It is needless to say that the filter medium of the secondary filter element then needs to have rather stiff and (in an axial direction) self-supporting properties. This may be achieved by a textile finishing of the filter medium. For instance, the filter medium may be partially embedded in a resin material. Also, there may be metal or other fibers provided in the filter medium having a sufficient resistance to bending

According to the invention, the filter medium of the secondary filter element may be glued, stitched and/or welded to the supporting structure.

A sealing between the secondary filter element and the filter housing, there may be an elastically deformable, in particular elastomeric, sealing ring provided which encompasses the filter medium of the secondary filter element in the region of the mounting ring and which, preferably in a radial direction, sealingly abuts against a sealing surface of the filter housing. The sealing ring may be made of rubber or a suitable elastomer.

The secondary filter element is snap-fitted to the filter housing, in particular the central support tube thereof, to ensure a proper seating of the secondary filter element within the filter housing. An unwanted dislodgement of the secondary filter element during use or during maintenance work can thereby be prevented.

According to a preferred embodiment of the invention, the filter housing has a groove-shaped retaining structure with the first end portion of the filter element engaging into the said retaining structure. The groove-shaped retaining structure preferably tapers in an axial direction towards the groove base (bottom). This allows an easy mounting of the second filter element in a sealing position inside the groove. Further, the first end-portion of the secondary filter element can be held in said retaining structure in a radial press-fit. As to this, the filter medium and the mounting ring, in an unloaded state, that is unmounted state, preferably have a greater radial thickness than the minimal radial clear width of the groove-shaped retaining structure. This allows for a sufficient radial sealing between the first end portion of the secondary filter element and the filter housing.

To further enhance the sealing capacity of the filter medium, the said filter medium may be doubled at the end portion of the secondary filter element. For this, the filter medium is preferably simply folded back with a free end section thereof. By this, more material of the filter medium can be compacted by a radial compression thereof and which ensures an improved sealing capacity of the filter medium. Clearly, this may also help compensate for dimensional tolerances of the supporting ring as well as the retaining structure.

According to a further preferred embodiment of the invention, the filter medium of the secondary filter element comprises or consists of a fibrous, in particular a non-woven, material. These materials are available at low cost and with suitable mean pore sizes.

The filter medium may have a larger mean pore size than the filter medium of the primary filter element as this is sufficient for protection of aggregates further downstream against damage. As to this, the filter medium of the second filter element is preferably designed, structured and adapted for filtering coarse particulate matter from the fluid, in particular with a diameter exceeding 0.1 millimeters.

With respect to a cost-efficient and easy mounting of the secondary filter element inside the housing, the secondary filter element can be snap-fitted to the filter housing. By this, the secondary filter element may also be positioned in a predefined mounting position with respect to the filter housing as well as the main filter element. Further, the risk of an unfavorable dislodgment of the secondary filter element from its seal seat in the aforementioned groove-shaped retaining structure can be reliably prevented.

According to the invention, the central support tube preferably has an outer diameter, which tapers in an axial direction towards the free end thereof. By this, the secondary filter element may be threaded more easily on the central support tube without damaging the support structure and/or filter medium of the secondary filter element.

The filter housing may preferably comprise a filter bowl having a first opening and a lid for closing of the opening, wherein the central support tube is molded to or mounted, in particular snap-fitted, glued or welded, on the housing lid. This allows for an easy and cost-efficient replacement of the main filter element. Further, the support tube can be made of a thicker and a highly durable material which has a long life expectancy that exceeds that of the main filter element many times.

The support structure of the secondary filter element is preferably made of a resin such as a thermoplast or a duroplast.

The filter container may have a second opening positioned opposite to the first opening and a cover which is releasably attached to the filter container for closure of the second opening. This may further facilitate the replacement of the main filter element, in particular if the filter is mounted in a confined or difficult to reach space.

The secondary filter element according to the invention, due to its lightweight and simple construction, is cost-efficient to manufacture and can be mounted easily and safely in the filter housing.

### BRIEF DESCRIPTION OF THE DRAWINGS

Embodiments or the present invention will now be described, by way of example only, with reference to the accompanying drawings, in which:
- Fig. 1: illustrates a fluid filter with a filter housing in which are seated a main and an auxiliary filter element, which serves as a safety element by which a potentially detrimental ingress of dirt particles onto the clean side of the fluid filter can be prevented during maintenance work;
- Fig. 2: illustrates the fluid filter according to Fig. 1 in a partially exploded view of it parts;
- Fig. 3: illustrates the fluid filter according to Fig. 1 in a further partially exploded view of it parts;
- Fig. 4: shows a cross-sectional view of a secondary filter element of the fluid filter according to Fig. 1,
- Fig. 5: shows a detailed sectional view of the fluid filter according to Fig. 1;
- Fig. 6: shows an alternative embodiment of a fluid filter in a partial sectional view.

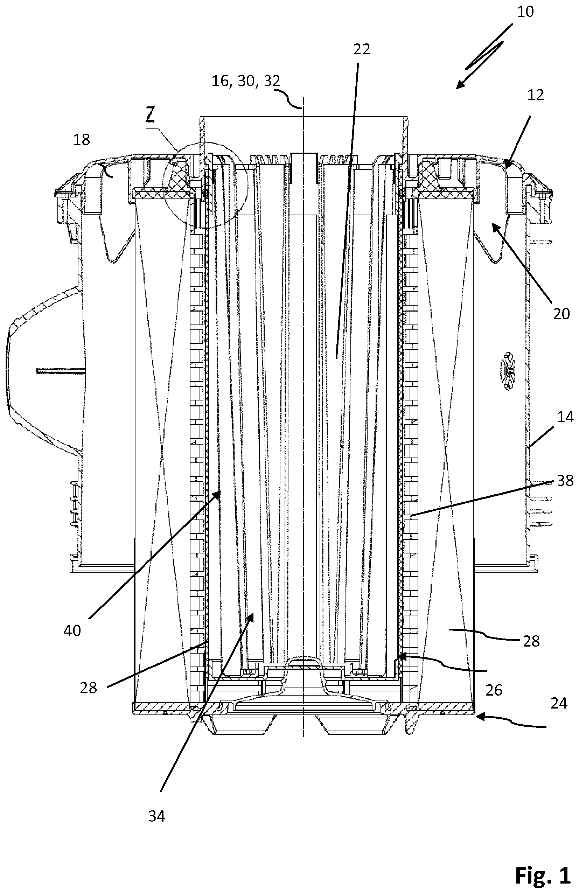

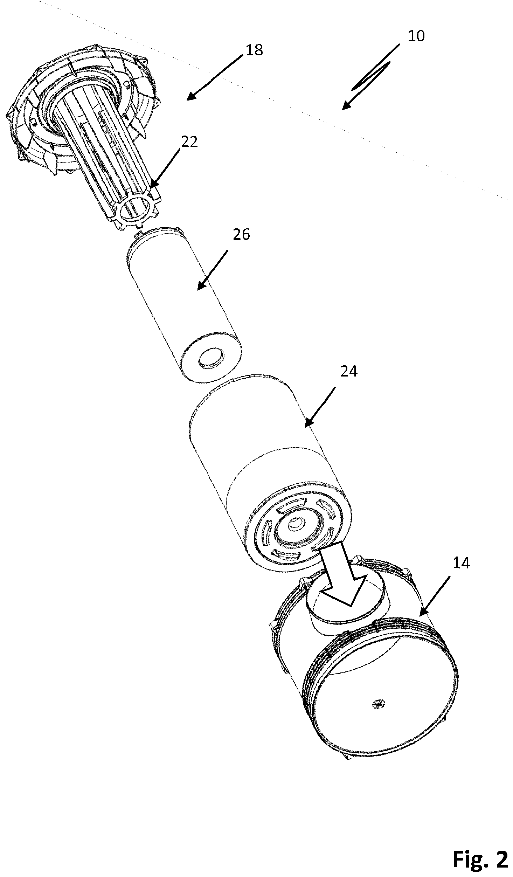

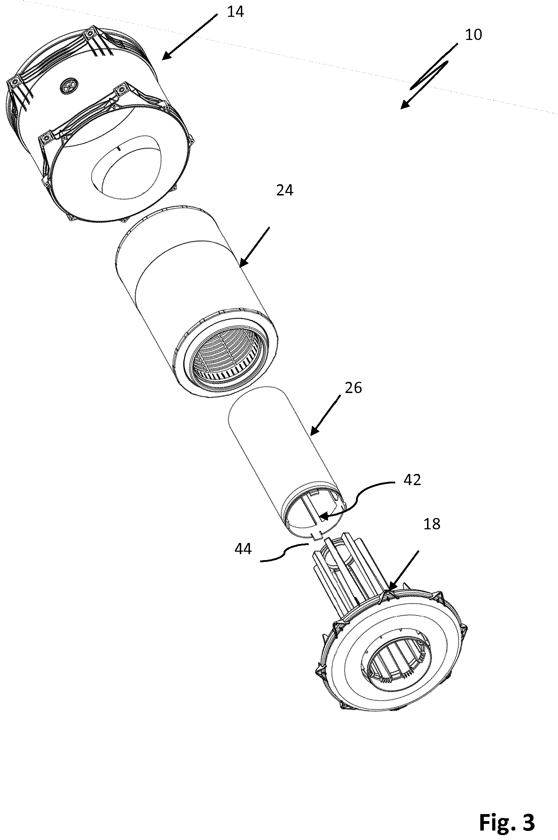

Referring to **Figures 1** to **3****,** there is shown a fluid filter **10** according to the invention and which may, for instance, be used as an air filter for an air intake of a combustion engine, in particular a utility vehicle such as a truck or a bulldozer or the like. In Fig. 1, the fluid filter 10 is shown in its partially assembled state, whereas Figs. 2 and 3 show exploded views of the fluid filter 10. The fluid filter 10 comprises a multi-part filter housing **12** with a filter container **14** extending along a longitudinal axis **16** of the filter housing 12 an which is only partially displayed in Fig. 1. There is a housing lid **18** which serves to close an opening **20** of the filter container 14 provided at one end thereof. The housing lid 18 is detachably locked and secured against loosening on the filter container 14 which may, for instance, be realized by snap-fit, a mutual thread engagement of the housing lid 18 and the filter container 14 or by separate fastening means such as screws or the like. The filter housing 12, here the housing lid 18, is provided with a central support tube **22.** The central support tube 22 is preferably molded-on the housing lid 18 such that the housing lid 18 and the support tube 22 can be manufactured as an one-piece injection-moulded part in a cost-efficient way. The central support tube 22 is thus an integral part of the filter housing 12 and is as such designed as a long-life part.

The fluid filter 10 comprises a main or primary filter element **24** and an auxiliary or secondary filter element **26,** which are each placed inside the filter housing 12 for filtering particulate matter, in particular dirt particles, contained in the fluid. Both the primary filter element 24 and the secondary filter element 26 are of a basically cylindrical design and comprise a filter medium **28** which is arranged in a circular fashion around a longitudinal axis **30, 32** of the respective filter element 24, 26. The filter medium 28 of the primary filter element may be a zig-zag-shaped pleated filter medium 28 to thereby increase the functional filter surface of the primary filter element 24. The filter medium 28 of the secondary filter element 26 preferably comprises or consists of a non-woven material. It needs to be noted, that the filter medium of the secondary filter medium has a greater pore size than the filter medium 28 of the primary filter element 26. The fluid to be filtered sequentially flows through the primary and the secondary filter element 24, 26 in a radial direction from outside to inside. The secondary filter element is thus - in fluid view - arranged downstream with respect to the primary filter element 24. A clean fluid side of the fluid filter is denominated **34.** The primary and the secondary filter element 24, 26 are each provided with an end disk **36** and which covers the filter medium 28 in an axial direction. The end disks 36 are formed of a resin material with the respective filter medium glued or welded to the end disk 36 or embedded in the material of the respective end disk 36. The primary filter element 24 has an integral central tube **38** of a perforated or grid-shaped design which supports the filter medium 28 of the primary filter element 24 in a radial direction on the inside thereof and which is best seen in Figs. 1 and 3.

Each of the filter elements 24, 26 has a central recess generally designated **40** in the drawing. The central recess 40 of the secondary filter element 26 is designed, structured and dimensioned such that the secondary filter element 26 may be directly threaded, that is slided, on the central support tube 22 of the filter housing 12. The central support tube 22 has a cross section which tapers towards a free end thereof. The central recess 40 of the primary filter element 24 is designed, structured and dimensioned such that the primary filter element 24 may be slided onto the secondary filter element 26 when mounting the primary filter element 24 inside the filter housing 12. In the assembled state of the fluid filter 10 as shown in Figure 1, the central support tube 22, the primary and the secondary filter element 24, 26 are arranged coaxially with respect to the longitudinal axis 16 of the filter housing 12. The secondary filter element is supported in a radial direction on an inside thereof by the central support tube 22 of the filter housing 12.

During use of the fluid filter 10, the primary filter element 24 can clog resulting in an increase of pressure difference at the fluid filter 10. The primary filter element, therefore, needs to be replaced at certain intervals to maintain a sufficient filtering function. When replacing the primary filter element 24, the secondary filter element 26 preferably remains in its mounted position inside the filter housing 12 thereby serving as a back-up or safety filter element to prevent an ingress of dirt particles into the clean side 34 of the fluid filter 10 to protect an aggregate, in particular a combustion engine, fluidly connected thereto from potential damage associated therewith.

Due to the central support tube 22 provided by the filter housing, the secondary filter element 26 can be made of a rather filigree construction with only very little material usage.

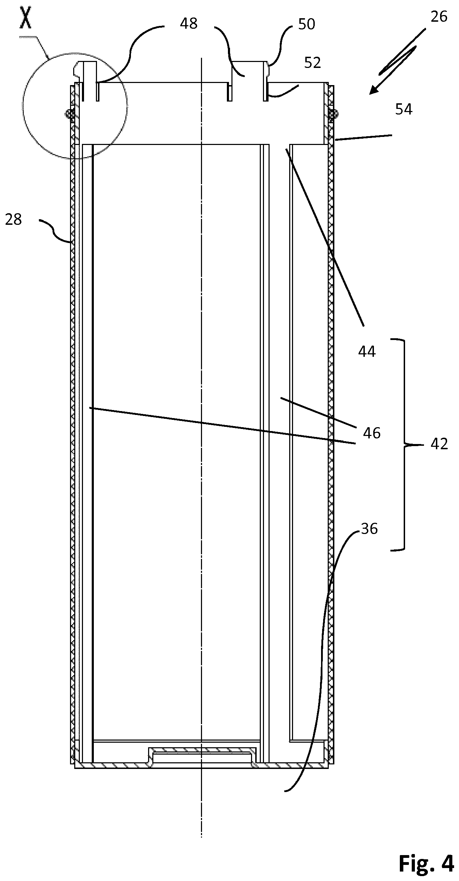

**Fig. 4** shows the secondary filter element 26 in a cropped view. The secondary filter element 26 has a minimalistic support structure **42,** which is positioned in a radial direction on an inside of the filter medium. The support structure comprises a mounting ring **44,** the end disk 36 and which are interconnected to one another by a plurality of axial struts **46** only. In other words, there are no further transverse struts, which interconnect the axial struts. The filter medium 28 is circumferentially attached, in particular glued, to the mounting ring 44 as well as to the end disc 36 of the support structure 42. By means of the support structure 42, the filter medium 28 of the secondary filter element 26 is sufficiently stabilized for mounting the secondary filter element 26 on the central support tube 22 of the fluid filter housing 12 (Fig. 1) and maintaining a predetermined axial extension of the filter medium 28.

There are snap-in tongues **48** provided on the mounting ring 44 of the support structure 42 which serve for a detachably connecting the secondary filter element 26 to the filter housing, preferably the central support tube 22 thereof. The snap-in tongues 48 are provided with first and second slanted surfaces **50, 52** such that the snap-in tongues may be easily slided into their locking position on filter housing 12 and be removed out of the said locking position (Fig. 1) in an axial direction if necessary. A sealing abutment of the secondary filter element 26 against the filter housing 12 is desirable for preventing a bypass of contaminated fluid to the clean side (Fig. 1) of the fluid filter 10. A sealing seat of the secondary filter element is realized in the embodiment shown in Figs 1 to 4 by a seal ring **54** which encompasses the filter medium 28 of the secondary filter element 26 in the region of tits first end portion 56 and which is in a sealing contact with a corresponding sealing surface provided by the filter housing, in particular the housing lid 18 thereof. The sealing ring 54 is preferably made of rubber or another rubber-elastically deformable material, in particular an elastomer, to ensure a sufficient sealing capacity. The seal ring 54 may be formed as a simple O-ring or, alternatively, may have a different cross-sectional shape.

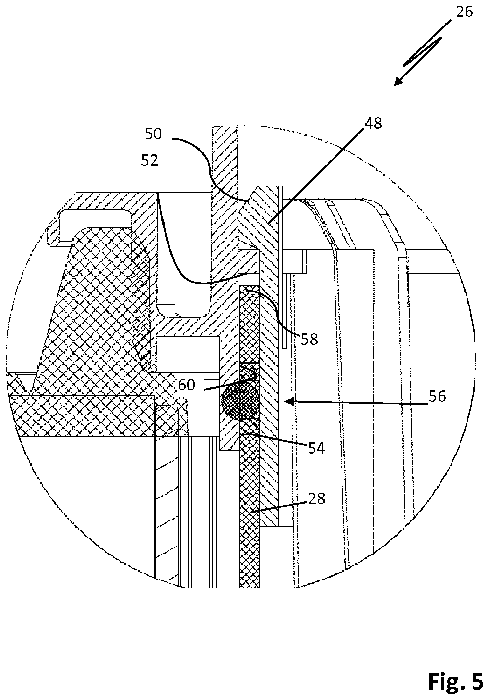

In **Fig. 5****,** there is shown a detailed cutout of the fluid filter 10 which is designated "Z" in Fig. 1. The snap-in tongues 48 each engage behind a ring shoulder **58** of the housing lid 18 which protrudes towards the longitudinal axis 16 of the filter housing 12 in a radially inside direction. The sealing ring 54 abuts against the sealing surface **60** of the housing lid 18 and the filter medium 18 in a radial direction.

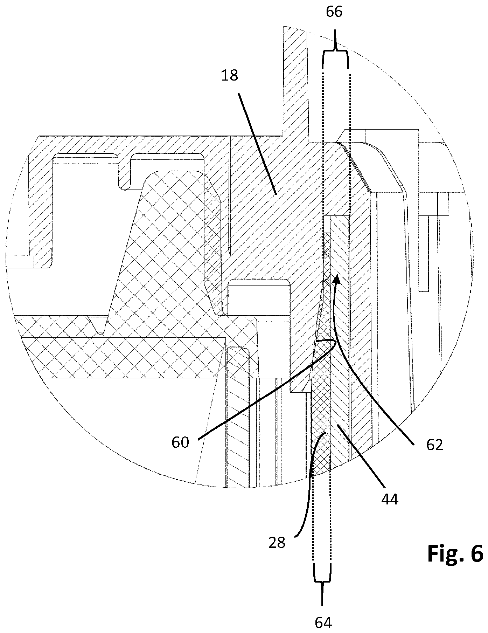

**Fig.** 6 shows a detailed view of a further embodiment of the fluid filter 10, where a sealing seat of the first end portion 65 of the secondary filter element 26 in the filter housing 12 is realized without a separate sealing element. The first end portion 56 of the secondary filter element 26 engages in a retaining structure **62** of the housing lid which is designed as a radial groove. The radial grove is designed dimensioned and structured such that the filter medium 28 is compressed in a radial direction between the radially inner mounting ring and the radially outer sealing surface of the filter housing 12. Due to the radial contact pressing of the filter medium 28 against the sealing surface 60, it is the filter medium 28 itself which acts as a sealing element. It needs to be noted, that the groove-shaped retaining structure 62 tapers in an axial direction to facilitate insertion of the secondary filter element 26. The filter medium 28 and the mounting ring preferably have a radial thickness **64** in the unloaded state, that is in the unmounted state of the secondary filter element, which exceeds the minimal radial width **66** of the retaining structure 62 to allow for a compensation of typical manufacturing tolerances and to thereby provide a sufficient sealing effect.

## Claims

1. Fluid filter (10) for filtering a fluid, in particular air, comprising:
- a filter housing (12) having an integral central support tube (22) which extends along a longitudinal axis (16) of the filter housing (12) within the filter housing (12);
- a primary filter element (24) arranged inside the filter housing (12) in an exchangeable manner, and
a secondary filter element (26), which is positioned at least partially inside the main filter element (24) and which is supported in a radial direction on an inside thereof by the central support tube (22), wherein the secondary filter element (26) comprises a support structure (42) and a filter medium (28) arranged in a ring-shaped fashion around the support-structure (42), the support structure (42) comprising a mounting ring (44) positioned at a first end portion (56) of the secondary filter element (26) to which the filter medium (28) is fixed in a non-detachably manner and wherein a sealing between the first end portion (56) of the secondary filter element (26) and the filter housing (12) is effected partially or solely by the filter medium (28) of the secondary filter element (26), wherein the support structure of the secondary filter element (26) has an end disc (36), wherein the mounting ring (44) and the end disk (36) are connected to one another by axial struts (46), wherein the secondary filter element (26) is snap-fitted to the filter housing (12), in particular the central support tube (22) thereof, and wherein there are snap-in tongues (48) provided on the mounting ring (44) of the support structure (42) which serve for a detachable connecting the secondary filter element (26) to the filter housing.

2. Fluid filter according to claim 1, **characterized in that** there is an elastically deformable sealing ring (54) provided which encompasses said filter medium (28) of the secondary filter element (26) in the region of the mounting ring (44) and which, in a radial direction, sealingly abuts against a sealing surface (60) of the filter housing (12).

3. Fluid filter according to any of the preceding claims, **characterized in that** the filter housing (12) has a groove-shaped retaining structure (62) with the first end portion (56) of the secondary filter element (26) engaging in said retaining structure (62).

4. Fluid filter according to claim 3, **characterized in that** the groove-shaped retaining structure tapers in an axial direction such that the first end-portion (56) of the secondary filter element (26) is held in said retaining structure (62) in a radial press-fit.

5. Fluid filter according to any of the preceding claims, **characterized in that** the filter medium (28), at the first end portion (56) of the secondary filter element (26), is doubled, in particular folded back.

6. Fluid filter according to any one of the preceding claims, **characterized in that** the central support tube (22) of has a cross section which tapers in an axial direction towards a free end thereof.

7. Fluid filter according to any of the preceding claims, **characterized in that** the filter medium (28) of the secondary filter element (26) comprises or is made of a fibrous, in particular non-woven, material.

8. Fluid filter according to any of the preceding claims, **characterized in that** the filter medium (28) of the second filter element (26) has a larger mean pore size than the filter medium (28) of the primary filter element (24).

9. Fluid filter according to claim 8, **characterized in that** the filter medium (28) of the secondary filter element (26) is designed, structured and adapted for filtering coarse particulate matter from the fluid, in particular with a diameter exceeding 0,1 millimeters.

10. Fluid filter according to any of the preceding claims, **characterized in that** the filter housing comprises a filter container 14 having a first opening 20 and a lid for closing of the first opening 20, wherein the central support tube (22) is molded to or mounted, in particular snap-fitted, glued or welded, on the housing lid (18).

11. Fluid filter according to claims 3 and 10, **characterized in that** the groove-shaped retaining structure (62) is provided on the housing lid (18).

12. Use of a secondary filter element (26) in a fluid filter (10) according to any of the preceding claims,
- wherein secondary filter element (26) is adapted to be positioned at least partially inside the main filter element (24) of the fluid filter (10) and in an installed position is supported in a radial direction on an inside thereof by the central support tube (22) of the fluid filter (10),
- wherein the secondary filter element (26) comprises a support structure (42) and a filter medium (28) arranged in a ring-shaped fashion around the support-structure (42),
- the support structure (42) comprising a mounting ring (44) positioned at a first end portion (56) of the secondary filter element (26) to which the filter medium (28) is fixed in a non-detachably manner and wherein a sealing between the first end portion (56) of the secondary filter element (26) and the filter housing (12) can be effected partially or solely by the filter medium (28) of the secondary filter element (26),
- wherein the support structure of the secondary filter element (26) has an end disc (36),
- wherein the mounting ring (44) and the end disk (36) are connected to one another by axial struts (46),
- wherein the secondary filter element (26) can be snap-fitted to the filter housing (12) of the fluid filter (10), in particular the central support tube (22) thereof, and wherein there are snap-in tongues (48) provided on the mounting ring (44) of the support structure (42) which serve for a detachable connecting the secondary filter element (26) to the filter housing.

## Patentansprüche

1. Fluidfilter (10) zum Filtern eines Fluids, insbesondere Luft, umfassend:
- ein Filtergehäuse (12) mit einem integrierten zentralen Stützrohr (22), welches sich entlang einer Längsachse (16) des Filtergehäuses (12) innerhalb des Filtergehäuses (12) erstreckt;
- ein im Inneren des Filtergehäuses (12) auswechselbar angeordnetes Primärfilterelement (24), und
ein Sekundärfilterelement (26), welches zumindest teilweise innerhalb des Hauptfilterelements (24) positioniert ist und welches in einer radialen Richtung an einer Innenseite desselben durch das zentrale Stützrohr (22) gestützt wird, wobei das Sekundärfilterelement (26) eine Stützstruktur (42) und ein ringförmig um die Stützstruktur (42) angeordnetes Filtermedium (28) umfasst, wobei die Stützstruktur (42) einen Montagering (44) umfasst, welcher an einem ersten Endabschnitt (56) des Sekundärfilterelements (26) positioniert ist, an welchem das Filtermedium (28) unlösbar befestigt ist und wobei eine Abdichtung zwischen dem ersten Endabschnitt (56) des Sekundärfilterelements (26) und dem Filtergehäuse (12) teilweise oder ausschließlich durch das Filtermedium (28) des Sekundärfilterelements (26) erfolgt, wobei die Stützstruktur des Sekundärfilterelements (26) eine Endscheibe (36) hat, wobei der Montagering (44) und die Endscheibe (36) durch Axialstreben (46) miteinander verbunden sind, wobei das Sekundärfilterelement (26) mit dem Filtergehäuse (12), insbesondere mit dessen zentralem Stützrohr (22), verrastet ist, und wobei an dem Montagering (44) der Stützstruktur (42) Rastzungen (48) vorgesehen sind, welche für eine lösbare Verbindung des Sekundärfilterelements (26) mit dem Filtergehäuse sorgen.

2. Fluidfilter nach Anspruch 1, **dadurch gekennzeichnet, dass** ein elastisch verformbarer Dichtungsring (54) vorgesehen ist, welcher das Filtermedium (28) des Sekundärfilterelements (26) in dem Bereich des Montagerings (44) umgibt und welcher in einer Radialrichtung dichtend an einer Dichtfläche (60) des Filtergehäuses (12) anliegt.

3. Fluidfilter nach einem der obigen Ansprüche, **dadurch gekennzeichnet, dass** das Filtergehäuse (12) eine nutförmige Rückhaltestruktur (62) hat, wobei der erste Endabschnitt (56) des Sekundärfilterelements (26) in die Rückhaltestruktur (62) eingreift.

4. Fluidfilter nach Anspruch 3, **dadurch gekennzeichnet, dass** die nutförmige Rückhaltestruktur sich in eine Achsenrichtung derart verjüngt, dass der erste Endabschnitt (56) des Sekundärfilterelements (26) in der Rückhaltestruktur (62) in einer radialen Presspassung gehalten wird.

5. Fluidfilter nach einem der obigen Ansprüche, **dadurch gekennzeichnet, dass** das Filtermedium (28) an dem ersten Endabschnitt (56) des Sekundärfilterelements (26) zweifach gefaltet, insbesondere zurückgefaltet ist.

6. Fluidfilter nach einem der obigen Ansprüche, **dadurch gekennzeichnet, dass** das zentrale Stützrohr (22) einen Querschnitt hat, welcher sich in einer Achsenrichtung in Richtung eines freien Endes desselben verjüngt.

7. Fluidfilter nach einem der obigen Ansprüche, **dadurch gekennzeichnet, dass** das Filtermedium (28) des Sekundärfilterelements (26) ein faserhaltiges Material, insbesondere Vliesmaterial umfasst.

8. Fluidfilter nach einem der obigen Ansprüche, **dadurch gekennzeichnet, dass** das Filtermedium (28) des Sekundärfilterelements (26) eine größere mittlere Porengröße aufweist als das Filtermedium (28) des Primärfilterelements (24).

9. Fluidfilter nach Anspruch 8, **dadurch gekennzeichnet, dass** das Filtermedium (28) des Sekundärfilterelements (26) zum Filtern grobkörniger Partikel aus dem Fluid, insbesondere mit einem Durchmesser größer als 0,1 mm, ausgebildet, strukturiert und angepasst ist.

10. Fluidfilter nach einem der obigen Ansprüche, **dadurch gekennzeichnet, dass** das Filtergehäuse einen Filterbehälter (14) mit einer ersten Öffnung (20) und einem Deckel zum Verschließen der ersten Öffnung (20) umfasst, wobei das zentrale Stützrohr (22) an dem Gehäusedeckel (18) angeformt oder montiert, insbesondere verrastet, geklebt oder angeschweißt ist.

11. Fluidfilter nach den Ansprüchen 3 und 10, **dadurch gekennzeichnet, dass** die nutförmige Rückhaltestruktur (62) an dem Gehäusedeckel (18) vorgesehen ist.

12. Verwendung eines Sekundärfilterelements (26) in einem Fluidfilter (10) nach einem der obigen Ansprüche,
- wobei das Sekundärfilterelement (26) ausgelegt ist, um zumindest teilweise innerhalb des Hauptfilterelements (24) des Fluidfilters (10) positioniert zu werden und welches in einer radialen Richtung an einer Innenseite desselben durch das zentrale Stützrohr (22) des Fluidfilters (10) gestützt wird,
- wobei das Sekundärfilterelement (26) eine Stützstruktur (42) und ein ringförmig um die Stützstruktur (42) angeordnetes Filtermedium (28) umfasst,
- wobei die Stützstruktur (42) einen Montagering (44) umfasst, welcher an einem ersten Endabschnitt (56) des Sekundärfilterelements (26) positioniert ist, an welchem das Filtermedium (28) unlösbar befestigt ist und wobei eine Abdichtung zwischen dem ersten Endabschnitt (56) des Sekundärfilterelements (26) und dem Filtergehäuse (12) teilweise oder ausschließlich durch das Filtermedium (28) des Sekundärfilterelements (26) erfolgen kann,
- wobei die Stützstruktur des Sekundärfilterelements (26) eine Endscheibe (36) hat,
- wobei der Montagering (44) und die Endscheibe (36) durch Axialstreben (46) miteinander verbunden sind,
- wobei das Sekundärfilterelement (26) mit dem Filtergehäuse (12) des Fluidfilters (10), insbesondere mit dessen zentralem Stützrohr (22), verrastet werden kann, und wobei an dem Montagering (44) der Stützstruktur (42) Rastzungen (48) vorgesehen sind, welche für eine lösbare Verbindung des Sekundärfilterelements (26) mit dem Filtergehäuse sorgen.

## Revendications

1. Filtre à fluide (10) pour filtrer un fluide, notamment de l'air, comprenant :
- un boîtier de filtre (12) ayant un tube de support central d'un seul tenant (22) qui s'étend le long d'un axe longitudinal (16) du boîtier de filtre (12) au sein du boîtier de filtre (12) ;
- un élément filtrant primaire (24) agencé à l'intérieur du boîtier de filtre (12) d'une manière échangeable, et
un élément filtrant secondaire (26), qui est positionné au moins partiellement à l'intérieur de l'élément filtrant principal (24) et qui est supporté dans une direction radiale sur un intérieur de celui-ci par le tube de support central (22), dans lequel l'élément filtrant secondaire (26) comprend une structure de support (42) et un milieu filtrant (28) agencé de manière annulaire autour de la structure de support (42), la structure de support (42) comprenant un anneau de montage (44) positionné au niveau d'une première section d'extrémité (56) de l'élément filtrant secondaire (26) à laquelle le milieu filtrant (28) est fixé d'une manière non détachable et dans lequel une étanchéité entre la première section d'extrémité (56) de l'élément filtrant secondaire (26) et le boîtier de filtre (12) est réalisée partiellement ou seulement par le milieu filtrant (28) de l'élément filtrant secondaire (26), dans lequel la structure de support de l'élément filtrant secondaire (26) a un disque d'extrémité (36), dans lequel l'anneau de montage (44) et le disque d'extrémité (36) sont reliés l'un à l'autre par des entretoises axiales (46), dans lequel l'élément filtrant secondaire (26) est encliqueté au boîtier de filtre (12), notamment au tube de support central (22) de celui-ci, et dans lequel il y a des languettes d'encliquetage (48) placées sur l'anneau de montage (44) de la structure de support (42) qui servent à réaliser une liaison détachable de l'élément filtrant secondaire (26) au boîtier de filtre.

2. Filtre à fluide selon la revendication 1, **caractérisé en ce qu'**il y a une bague d'étanchéité élastiquement déformable (54) qui englobe le milieu filtrant (28) de l'élément filtrant secondaire (26) dans la région de l'anneau de montage (44) et qui, dans une direction radiale, vient en butée de manière étanche contre une surface d'étanchéité (60) du boîtier de filtre (12).

3. Filtre à fluide selon l'une let des revendications précédentes, **caractérisé en ce que** le boîtier de filtre (12) a une structure de rétention en forme de rainure (62) avec la première section d'extrémité (56) de l'élément filtrant secondaire (26) venant en prise dans ladite structure de rétention (62).

4. Filtre à fluide selon la revendication 3, **caractérisé en ce que** la structure de rétention en forme de rainure se rétrécit dans une direction axiale de sorte que la première section d'extrémité (56) de l'élément filtrant secondaire (26) est maintenue dans la structure de rétention (62) dans un ajustement serré radial.

5. Filtre à fluide selon l'une quelconque des revendications précédentes, **caractérisé en ce que** le milieu filtrant (28), au niveau de la première section d'extrémité (56) de l'élément filtrant secondaire (26), est doublé, notamment replié.

6. Filtre à fluide selon l'une quelconque des revendications précédentes, **caractérisé en ce que** le tube de support central (22) a une section transversale qui se rétrécit dans une direction axiale en direction d'une extrémité libre de celui-ci.

7. Filtre à fluide selon l'une quelconque des revendications précédentes, **caractérisé en ce que** le milieu filtrant (28) de l'élément filtrant secondaire (26) comprend un ou est constitué d'un matériau fibreux, notamment non tissé.

8. Filtre à fluide selon l'une quelconque des revendications précédentes, **caractérisé en ce que** le milieu filtrant (28) de l'élément filtrant secondaire (26) a une taille moyenne de pore plus grande que le milieu filtrant (28) de l'élément filtrant primaire (24).

9. Filtre à fluide selon la revendication 8, **caractérisé en ce que** le milieu filtrant (28) de l'élément filtrant secondaire (26) est conçu, structuré et adapté pour filtrer une matière particulaire à gros grains du fluide, notamment avec un diamètre dépassant 0,1 millimètre.

10. Filtre à fluide selon l'une quelconque des revendications précédentes, **caractérisé en ce que** le boîtier de filtre comprend un contenant de filtre (14) ayant une première ouverture (20) et un couvercle pour la fermeture de la première ouverture (20), dans lequel le tube de support central (22) est moulé au, ou monté, notamment encliqueté, collé ou soudé, sur le couvercle de boîtier (18).

11. Filtre à fluide selon les revendications 3 et 10, **caractérisé en ce que** la structure de rétention en forme de rainure (62) est prévue sur le couvercle de boîtier (18).

12. Utilisation d'un élément filtrant secondaire (26) dans un filtre à fluide (10) selon l'une quelconque des revendications précédentes,
- dans laquelle l'élément filtrant secondaire (26) est conçu pour être positionné au moins partiellement à l'intérieur de l'élément filtrant principal (24) du filtre à fluide (10) et, en position installée, est supporté dans une direction radiale sur un intérieur de celui-ci par le tube de support central (22) du filtre à fluide (10),
- dans laquelle l'élément filtrant secondaire (26) comprend une structure de support (42) et un milieu filtrant (28) agencé de manière annulaire autour de la structure de support (42),
- la structure de support (42), comprenant un anneau de montage (44) positionné au niveau d'une première section d'extrémité (56) de l'élément filtrant secondaire (26) à laquelle le milieu filtrant (28) est fixé d'une manière non détachable et dans laquelle une étanchéité entre la première section d'extrémité (56) de l'élément filtrant secondaire (26) et le boîtier de filtre (12) peut être réalisée partiellement ou seulement par le milieu filtrant (28) de l'élément filtrant secondaire (26),
- dans laquelle la structure de support de l'élément filtrant secondaire (26) a un disque d'extrémité (36),
- dans laquelle l'anneau de montage (44) et le disque d'extrémité (36) sont reliés l'un à l'autre par des entretoises axiales (46),
- dans laquelle l'élément filtrant secondaire (26) peut être encliqueté au boîtier de filtre (12) du filtre à fluide (10), notamment au tube de support central (22) de celui-ci, et dans laquelle il y a des languettes d'encliquetage (48) placées sur l'anneau de montage (44) de la structure de support (42) qui servent à réaliser une liaison détachable de l'élément filtrant secondaire (26) au boîtier de filtre.
